Europäisches Patentamt

European Patent Office

Office européen des brevets

(19)

(11) Veröffentlichungsnummer: **0 000 583**
**B2**

(12) # NEUE EUROPÄISCHE PATENTSCHRIFT

(45) Veröffentlichungstag der neuen Patentschrift:
**16.08.90**

(21) Anmeldenummer: **78100511.1**

(22) Anmeldetag: **26.07.78**

(51) Int. Cl.⁵: **C 08 L 77/00** // C08L9/02,
C08L23/04, C08L25/04,
C08L31/02, C08L83/00

(54) Hochschlagzähe Polyamidmasse und deren Verwendung in Formkörpern.

(30) Priorität: **02.08.77 DE 2734693**

(43) Veröffentlichungstag der Anmeldung:
**07.02.79 Patentblatt 79/03**

(45) Bekanntmachung des Hinweises auf die
Patenterteilung:
**08.04.81 Patenblatt 81/14**

(45) Bekanntmachung des Hinweises auf die
Entscheidung u¨ber den Einspruch:
**16.08.90 Patentblatt 90/33**

(84) Benannte Vertragsstaaten:
**DE FR GB NL**

(56) Entgegenhaltungen:
DE-A-2 611 332    DE-B-2 622 973
DE-A-2 612 011    FR-A-1 568 637
DE-A-2 626 273    FR-A-1 592 857
DE-A-2 654 168    FR-A-2 032 940
DE-A-2 713 537    FR-A-2 311 814
DE-B-1 241 606    US-A-3 472 916
DE-B-1 908 468    US-A-3 676 400
DE-B-2 333 533    US-A-3 843 591

ULlmanns Encyclopädie der technischen
Chemie 14. BD, 1963, S. 64-65

(73) Patentinhaber: **BAYER AG**
**D-5090 Leverkusen 1 Bayerwerk (DE)**

(72) Erfinder: **Meyer, Rolf-Volker, Dr.**
**Bodelschwinghstrasse 12**
**D-4150 Krefeld (DE)**
Erfinder: **Dhein, Rolf, Dr.**
**Deswatinesstrasse 30**
**D-4150 Krefeld (DE)**
Erfinder: **Fahnler, Friedrich**
**Wimmersweg 60**
**D-4150 Krefeld (DE)**

(56) Entgegenhaltungen:
**Kunststoff Handbuch, Bd VI, Polyamide, 1966, S.
671 & 537**

**BAYER-Kunststoffe Taschenbuch, 1963, S. 192-
195 und 198-199**

**Handbuch der BASF Kunststoffe, 1963, S. 58-71**

EP 0 000 583 B2

Courier Press, Leamington Spa, England.

**Beschreibung**

Gegenstand der Erfindung sind hochschlagzähe Polymerlegierungen auf Basis von Polyamiden, die eine rel. Viskosität von mindestens 3,5 gemessen an einer 1%igen Lösung des Polyamids in m-Kresol bei 25°C haben.

Die Schlagzähigkeit von Formkörpern aus Polyamidkunststoffen hängt erheblich vom Wassergehalt der Formkörper ab. In wasserfreiem Zustand, z.B. nach der Herstellung der Formkörper durch Spritzgießen sind besonders die aus leichtfließenden Polyamidspritzgußmassen mit mittlerem Molekulargewicht und hier wiederum die aus hochkristallinen Polyamiden hergestellten Formkörper relativ empfindlich gegen Schlagbeanspruchung. Es besteht daher ein Bedarf nach rasch verarbeitbaren, leichtfließenden Polyamidkunststoffen, aus denen sich Formkörper herstellen lassen, die in trockenem Zustand eine erhöhte Schlagzähigkeit besitzen. Insbesondere sind solche Polyamide von Interesse, die hohe Zugfestigkeit, hohe Wärmestandfestigkeit, gute Beständigkeit gegen Lösungsmittel und leichte Verarbeitbarkeit kombiniert mit einer hohen Schlagzähigkeit und Flexibilität aufweisen.

Es sind bereits verschiedene Verfahren zur Erhöhung der Zähigkeit und Flexibilität von Polyamiden bekannt. So z.B. das Einmischen von niedermolekularen Weichmachern in Polyamide, das aber aus mehreren Gründen keine zufriedenstellende Lösung des Problems bringt. Der größte Teil der für Kunststoffe geeigneten Weichmacher ist mit Polyamiden nicht genügend verträglich und entmischt sich beim Verarbeiten bzw. neigt zum Ausschwitzen. Verträgliche Weichmacher, die mit Polyamiden echte Lösungen bilden, verschlechtern aber meist die guten mechanischen Eigenschaften der Polyamide. Stark polare Stoffe mit niedrigem Molekulargewicht wie Wasser oder Dimethylformamid zeigen zwar eine starke Weichmacherwirkung. Sie können jedoch erste nach der Herstellung von Polyamidformkörpern in diese eingearbeitet werden, weil bei der Verarbeitung von entsprechend vorbehandeltem Polyamidgranulat wegen der relativ niederen Siedepunkte dieser Weichmacher blasenhaltige Formkörper entstehen würden.

Dieses Verfahren ist zudem im allgemeinen zeit- und kostenaufwendig. Außerdem ist es für die Herstellung dickwandiger Formteile wegen der unregelmäßigen Verteilung des Weichmachers im Formteil unbrauchbar.

Obendrein entweichen diese Weichmacher wegen ihres relativ hohen Dampfdruckes teilweise wieder aus dem Polyamid.

Nach anderen Verfahren wird die Schlagzähigkeit von Polyamiden durch Zumischen von polymeren Stoffen verbessert. So wurden Polyethylene und Copolymerisate aus Vinylacetat und Ethylen mit mäßigem Erfolg eingesetzt.

Die Herstellung derartiger Mischungen erfordert ein sehr intensives Kneten. Dennoch treten Entmischungen beim Weiterverarbeiten z.B. im Spritzguß teilweise wieder auf. Daraus hergestellte Formkörper zeigen bei Beanspruchung starken Weißbruch.

In dem GB—A 1 072 635 wird außerdem gelehrt, Polyolefine mit 5 bis 50 Gew.-% Polyamid zu modifizieren, um die Lösungsmitteldurchlässigkeit von Polyolefinen, insbesondere von Polyethylen, zu verbessern.

Nach einem weiteren Verfahren wird die Flexibilität von Polyamiden durch Einmischung von saure Gruppen enthaltenden Polyethylenen, wie z.B. Copolymerisation aus Ethylen und ungesättigten Säuren oder mit ungesättigten Säuren gepfropftem Polyethylen, erhöht. Derartige Mischungen sind zwar feindisperser und zeigen bei Beanspruchung einen weit geringeren Weißbruch als die oben beschriebenen Mischungen. Sie besitzen jedoch, abgesehen von der etwas verbesserten Zähigkeit und Flexibilität, erheblich schlechtere mechanische Eingeschaften, wie z.B. E-Modul, Zugfestigkeit, Härte, Steifigkeit als unvermischte Polyamidformassen (FR—A 13 86 563).

Gemäß der Lehre der FR—A 2 037 979 werden Polyamide mit Ethylencopolymeren modifiziert, die ihrerseits hydroxy- oder epoxy-substituierte Ester von $\alpha,\beta$-ungesättigten Säuren als Comonomere enthalten. Frotz des Einsatzes von Polyamid mit unterschiedlicher Viskosität kann dabei keine nennenswerte Beeinflussung der Kerbschlagzähigkeit beobachtet werden.

Aus dem US—PS 3 676 400 geht hervor Polyamide, deren Endgruppen zumindest zu 60% aus Aminogruppen bestehen, mit säuregruppenhaltigen olefinischen Copolymerisaten aus $C_2$—$C_{12}$ $\alpha$-Monoolefinen und $\alpha,\beta$-ungesättigten Monocarbonsäuren wie (Meth)acrylsäure abzumischen, wobei eine Verbesserung der Festigkeitseigenschaften erzielt werden und ein Anstieg der Schmelzviskosität, der erfindungsgemäß vermieden werden soll.

Weiterhin wurde auch ein Verfahren beschrieben, bei dem zur Erhöhung der Flexibilität von Polyamiden Copolymerisate aus Ethylen und Estern von (Meth)-Acrylsäure mit tert. Alkoholen eingesetzt werden.

Diese Legierungen weisen eine gute Homogenität auf und lassen sich ohne Neigung zur Entmischung gut verarbeiten. Die in spritzfrischen Probekörpern gemessenen Kerbschlagzähigkeiten dieser Produkte betragen jedoch auch nur 10—12 $kJ/m^2$.

Überraschend wurde nun gefunden, daß man Polyamidlegierungen mit im spritzfrischen Zustand besonders hoher Kerbschlagzähigkeit erhält, wenn man technische Polyamide, insbesondere technisches Polyamid-6 mit einer relativen Viskosität von mindestens 3,5, bevorzugt mindestens 3,8, gemessen an einer 1%igen Lösung des Polyamids in m-Kresol bei 25°C, zur Herstellung von Polyamidlegierungen verwendet.

Diese Verbesserung der Kerbschlagzähigkeit durch den Einsatz hochmolekularer Polyamide war völlig überraschend, da die üblicherweise verwendeten technischen Polyamide mit steigendem Molekulargewicht im spritzfrischen Zustand kaum einen Unterschied in der Kerbschlagzähigkeit aufweisen. Obendrein sind die höherviskosen Polyamide schwieriger zu verarbeiten.

Gegenstand der Erfindung sind daher im spritzfrischen, d.h. wasserfreien Zustand, hochschlagzähe Polyamidlegierungen bestehend aus:

1. 60—95 Gew.-%, vorzugsweise 70—90 Gew.-%, eines technischen Polyamids.

2. 5—40 Gew.-%, vorzugsweise 10—30 Gew.-%, mindestens einer weiteren hochmolekularen Polymerkomponente aus der Gruppe von

a) Mischungen aus aliphatischen Polyolefinen und olefinischen Copolymerisaten, die sich aus

α) 65—98 Gew.-%, vorzugsweise 75—95 Gew.-% eines aliphatischen Monoolefins mit $C_2$—$C_4$ und

β) 35—2 Gew.-%, vorzugsweise 25—5 Gew.-%, (Meth)acrylsäure oder (Meth)acrylsäure ester, mit $C_2$—$C_{10}$ zusammensetzen.

b) Copolymerisaten aus

γ) höchstens 70 Gew.-% Styrol,

ε) 5—15 Gew.-% (Meth)acrylsäure und

δ) 20—30 Gew.-% (Meth)acrylsäureester mit $C_4$—$C_{10}$ in der alkoholischen Komponente

c) Polymeren aus

α′) 70—100 Gew.-% aliphatischen Dienen mit $C_4$—$C_5$ und

β′) 0—30 Gew.-% Acrylnitril und

d) hochmolekularen siliciumorganischen Verbindungen.

mit den Bendingungen, daß die (Meth)acrylsäure ganz oder teilweise als Salz vorliegen kann und daß die Summe aus 1 + 2, a) bis d), α + β, α′ + β′ bzw. γ + ε + δ jeweils immer 100 Gew.-% beträgt, dadurch gekennzeichnet, daß das technische Polyamid eine relative Viskosität von mindestens 3,5, gemessen an einer 1%igen Lösung des Polyamids in m-Kresol bei 25°C aufweist.

Als technisches Polyamid wird vorzugsweise technisches Polyamid-6 mit einer relativen Viskosität von mindestens 3,5, eingesetzt. Überraschenderweise zeigen unter Verwendung der genannten hydrophoben und unpolaren Legierungspartner 2 technische Polyamide-6 mit einer relativen Viskosität von mindestens 3,5, vorzugsweise von mindestens 3,8, eine gegenüber analogen Legierungen auf Basis von Polyamiden-6 mit der in der Praxis für den Spritzgußsektor üblichen Viskosität ($\pi_{rel}$ ca. 3,0) eine drastische Verbesserung der Kerbschlagzähigkeit, wie es in diesem Verhältnis bisher nur durch Wasser, das bekanntlich z.T. in die Wasserstoffbrückenbindungen des Polyamids eingebaut ist, möglich war.

Allgemein kann die Kerbschlagzähigkeit bei sonst gleichen Bedingungen unter Verwendung von hochmolekularem Polyamid-6 gegenüber dem normalviskosen Polyamid-6 verdoppelt werden.

Um ausgehend von normalviskosem Polyamid-6 einen entsprechenden Anstieg der Kerbschlagzähigkeit zu erreichen, muß mindestens die doppelte Menge an Legierungspartnern verwendet werden. Dabei wird jedoch in der Regel sowohl die Homogenität verschlechtert als auch die Biegefestigkeit erheblich verringert.

In der Polymerkomponente 2a werden vorzugsweise Polymere von aliphatischen Monoolefinen mit $C_2$—$C_4$, insbesondere Polyethylene oder Polyethylen/Polypropylen-Copolymerisate, vorzugsweise mit Schmelzindices im Bereich von 5—20 g/10 Minuten (190°C) eingesetzt und als Copolymerisate vorzugsweise Copolymerisate aus Ethylen und (Meth)acrylsäure oder aus Ethylen und (Meth)acrylsäureester mit $C_2$—$C_{10}$, vorzugsweise $C_2$—$C_7$ im alkoholischen Rest, besonders bevorzugt —n— oder tert.-Butylester verwendet, deren Schmelzindices im Bereich von 2—10 g/10 Minuten bei 190°C ligen. Die (Meth)acrylsäure kann ganz oder teilweise als Salz vorliegen, vorzugsweise als Natrium oder Zinksalz.

Als Copolymerisate 2b werden vorzugsweise Copolymere aus Styrol, (Meth)acrylsäure und (Meth)acrylsäureester mit $C_4$—$C_{10}$, vorzugsweise $C_4$—$C_7$ in der alkoholischen Komponente, besonders bevorzugt n- oder tert.-Butylester eingesetzt.

Als Polymerisate gemäß 2 c eignen sich vorzugsweise hochmolekulare Polybutadiene und Polyisoprene, sowie Copolymere aus Butadien und/oder Isopren mit Acrylnitril, wobei der Anteil des Acrylnitrils vorzugsweise 10—30 Mol-% beträgt.

Als hochmolekulare siliciumorganische Verbindungen sind vorzugsweise Polydimethylsiloxane mit Molegwichten von mindestens 10.000, vorzugsweise mindestens 20.000, gut geeignet.

Die Legierungen können durch Vermischen der Ausgangskomponenten bei Temperaturen über dem Schmelzpunkt des verwendeten Polyamids, vorteilhaft bei Temperaturen von 200 bis 320°C, insbesondere bei 260 bis 290°C, hergestellt werden.

Vorrichtungen, in denen die erfindungsgemäßen Formmassen hergestellt werden können, sind übliche Schneckenmaschinen.

Es sind sowohl Maschinen mit einfachen als auch solche mit Doppelschnecken geeignet. Doppelschneckenextruder werden bevorzugt verwendet.

Es können jedoch auch andere Mischvorrichtungen verwendet werden, die zum Plastifizieren von Kunststoffen geeignet sind.

In die thermoplastischen Polyamid-Formmassen können außer den unter 2. genannten Polymerisaten und den Copolymerisaten auch Stabilisatoren, Entformungsmittel, Gleitmittel, Kristallisationsbeschleuniger, Weichmacher, Pigmente, Farbstoffe oder Füllstoffe, wie Glasfasern oder Asbest, eingearbeitet werden.

Formkörper aus den erfindungsgemäßen Polyamidlegierungen haben gegenüber Legierungen auf Basis von Polyamid-6 mit einer relativen Viskosität < 3,5 die gleiche Homogenität und zeigen keine Neigung zur Entmischung. Sie zeigen gute Oberflächenbeschaffenheiten und im Vergleich zu Formkörpern aus reinen Polyamiden eine verminderte Wasseraufnahme.

Die Formmassen eignen sich besonders für die Extruder- und Spritzgußverarbeitung zur Herstellung von verschiedenen hochschlagzähen Formkörpern u.a. auch Rohren.

Die relative Viskosität der technischen Polyamide wird an einer 1%igen Lösung des Polymeren in m-Kresol bei 25°C gemessen.

### Beispiel 1

90 Gew.-Teile eines technischen Polyamid-6 mit einer relativen Lösungsvikosität von 4,2 und einer nach DIN 53 453 bestimmten Kerbschlagzähigkeit von 3—4 KJ/m² und 10 Gew.-Teile eines Copolymerisats aus 75 Gew.-% Butadien und 25 Gew.-% Acrylnitril werden in einem Mischgerät 5 Min. gemischt. Die so vorbereitete Komponentenmischung wird in einem Zweiwellenextruder vom Typ ZSK 53 bei 90 U/Min. und 260°C verknetet und extrudiert, die Schmelze in ein Wasserbad abgesponnen, granuliert und dann bei 80°C im Vakuum bis zu einem Wassergehalt von < 0,05 Gew.-% getrocknet. An frisch gespritzten Probekörpern wird durch Wechselbiegeversuche eine gute Homogenität festgestellt und nach DIN 53 453 eine Kerbschlagzähigkeit von 19 kJ/m² gemessen.

Vergleichsversuch:

Ausgehend von einem technischen Polyamid-6 der relativen Viskosität 3,0 erhält man bei 10 Gew.-Teilen des gleichen Copolymeren eine Kerbschlagzähigkeit von 9,5 kJ/m², bei 25 Gew.-Teilen des Copolymeren 14 kJ/m².

### Beispiel 2

94 Gew.-Teile eines technischen Polyamids-6 mit einer relativen Viskosität von 4,2 werden wie in Beispiel 1 beschrieben mit 6 Gew.-Teilen eines Polydimethylsiloxans mit einem Molegwicht von ca. 50.000 compoundiert. Man erhält eine homogene Legierung mit einer Kerbschlagzähigkeit von 20 kJ/m².

Vergleichsversuch:

Ausgehend von einem Polyamid-6 der relativen Viskosität 3,0 erhält man eine homogene Legierung mit einer Kerbschlagzähigkeit von 12 kJ/m².

### Beispiel 3

88 Gew.-Teile eines technischen Polyamids-6 mit einer relativen Viskosität von 4,2 werden mit einem Silikongranulat (12 Gew.-Teile), das ein 50:50-Gemisch aus dem in Beispeil 2 beschriebenen Polydimethylsiloxan und Aerosil® ist, wie in Beispiel 1 beschrieben, compoundiert. Man erhält ein homogenes Produkt mit einer Kerbschlagzähigkeit von 15 kJ/m².

Verleichsversuch:

Ausgehend von einem technischen Polyamid-6 der relativen Viskosität 3,0 erhält man eine homogene Legierung mit einer Kerbschlagzähigkeit von 8,5 kJ/m².

### Patentansprüche

1. Hochschlagzähe Polyamidlegierungen bestehend aus

1) 60—95 Gew.-% eines technischen Polyamids und

2) 5—40 Gew.-% mindestens einer weiteren hochmolekularen Polymerkomponente aus der Gruppe von

a) Mischungen aus aliphatischen Polyolefinen und olefinischen Copolymerisaten, die sich aus

α) 65—98 Gew.-% eines aliphatischen Mono-olefins mit $C_2$—$C_4$ und

β) 35—2 Gew.-% (Meth)acrylsäure oder (Meth)acrylsäureestern mit $C_2$—$C_{10}$ zusammensetzen.

b) Copolymerisaten aus

γ) höchstens 70 Gew.-% Styrol,

ε) 5—15 Gew.-% (Methy)acrylsäure und

δ) 20—30 Gew.-% (Meth)acrylsäureesters mit $C_4$—$C_{10}$,

c) Polymeren aus

α') 70—100 Gew.-% Dienen mit $C_4$—$C_5$ und

β') 0—30 Gew.-% Acrylnitril und

d) von hochmolekularen siliciumorganischen Verbindungen.

unter den Bedingungen, daß die (Meth)acrylsäure ganz oder teilweise als Salz vorliegen kann und daß die Summe aus 1) + 2), a) bis d), α) + β), α') + β') bzw. γ, ε und δ jeweils immer 100 Gew.-% beträgt, durch gekennzeichnet, daß das technische Polyamid eine relative Viskosität von mindestens 3,5, gemessen an einer 1%igen Lösung des Polyamids in m-Kresol bei 25°C aufweist.

2. Polyamidlegierungen gemäß Anspruch 1, dadurch gekennzeichnet, daß sie aus 70—90 Gew.-% der Komponente 1) und 30—10 Gew.-% der Komponente 2) bestehen.

3. Polyamidlegierungen gemäß Anspruch 1, dadurch gekennzeichnet, daß sie als Komponente 1) technisches Polyamid-6 enthalten.

4. Polyamidlegierungen gemäß Anspruch 1, dadurch gekennzeichnet, daß sie als Komponente 2 a) eine Mischung aus Polyethylen oder ein Polyethylen/Polypropylen-Copolymerisat und aus einem Copolymerisat aus Ethylen, (Meth)Acrylsäure oder Methacrylsäureestern mit $C_2$—$C_7$ in der alkoholischen Komponente enthalten.

5. Polyamidlegierungen gemäß Anspruch 1, dadurch gekennzeichnet, daß sie als Komponente 2 b) ein Copolymerisat aus Styrol, (Meth)Acrylsäure und (Meth)Acrylsäureester mit $C_4$—$C_7$ in der alkoholischen Komponente enthalten.

6. Polyamidlegierungen gemäß Anspruch 1, dadurch gekennzeichnet,.daß sie als Komponente 2 c) Polybutadien, Polyisopren oder ein Copolymerisat aus Butadien und/oder Isopren mit Acrylnitril enthalten.

7. Polyamidlegierungen gemäß Anspruch 1, dadurch gekennzeichnet, daß sie als Komponente 2 d) ein Polydimethylsiloxan mit einem Molekulargewicht von mindestens 10.000 enthalten.

8. Polyamidlegierungen gemäß Ansprüchen 4 und 5, dadurch gekennzeichnet, daß sie als (Meth)-Acrylsäureester in der Komponente 2 a) und 2 b) (Meth)Acrylsäure-n- oder tert.-Butylester enthalten.

9. Formkörper aus Polyamidlegierungen gemäß Anspruch 1 bis 8.

**Revendications**

1. Alliages de polyamides à haute résilience consistant en
1) 60 à 95% en poids d'un polyamide industriel et
2) 5 à 40% en poids d'au moins un autre composant polymère à haut poids moléculaire choisi dans le groupe constitué par
a; les mélanges de polyoléfines aliphatiques et de copolymères oléfiniques qui sont composés de
α) 65 à 98% en poids d'une monooléfine aliphatique en C$_2$—C$_4$ et
β) 35 à 2% en poids d'acide acrylique ou méthacrylique ou d'esters acryliques ou méthacryliques en C$_2$—C$_{10}$,
b) les copolymères de
γ) au plus 70% en poids de styrène,
ε) 5 à 15% en poids d'acide acrylique ou méthacrylique et
δ) 20 à 30% en poids d'un ester acrylique ou méthacrylique en C$_4$—C$_{10}$,
c) les polymères de
α') 70 à 100% en poids de diènes en C$_4$—C$_5$ et
β') 0 à 30% en poids d'acrylonitrile et
d) les composés organosiliciés de haut poids moléculaire, avec les conditions que l'acide acrylique ou méthacrylique dans les copolymères oléfiniques dans 2a peut être totalement ou partiellement sous forme de sel et que la somme de 1) + 2), a) à d, α) + β), α') + β') et γ, ε et δ, respectivement, représentent toujours chaque fois 100% en poids, caractérisés en ce que le polyamide industriel présente un viscosité relative d'au moins, 3,5, mesurée sur un solution à 1% du polyamide dans le m-crésol à 25°C.

2. Alliages de polyamides selon la revendication 1, caractérisé en ce qu'ils consistent en 70 à 90% en poids du composant 1) et 30 à 10% en poids du composé 2).

3. Alliages de polyamides selon la revendication 1, caractérisé en ce qu'ils contiennent un polyamide-6 industriel comme composant 1).

4. Alliages de polyamides selon la revendication 1, caractérisés en ce qu'ils contiennent comme composant 2 a) un mélange de polyéthylène ou d'un copolymère polyéthylène/polypropylène et d'un copolymère d'éthylène, d'acide acrylique ou méthacrylique ou d'esters méthacryliques contenant 2 à 7 atomes de carbone dans le composant alcoolique.

5. Alliages de polyamides selon la revendication 1, caractérisé en ce qu'ils contiennent comme composant 2 b) un copolymère de styrène, d'acide acrylique ou méthacrylique et d'ester acrylique ou méthacrylique contenant 4 à 7 atomes de carbone dans le composant alcoolique.

6. Alliages de polyamides selon la revendication 1, caractérisé en ce qu'ils contiennent comme composant 2 c) du polybutadiène, du polyisoprène ou un copolymère du butadiène et/ou d'isoprène avec l'acrylonitrile.

7. Alliages de polyamides selon la revendication 1, caractérisé en ce qu'ils contiennent comme composant 2 d) un polydimethylsiloxanne d'un poids moléculaire d'au moins 10 000.

8. Alliages de polyamides selon la revendications 4 et 5, caractérisé en ce qu'ils contiennent comme ester acrylique ou méthacrylique dans les composants 2 a) et 2 b) l'acrylate ou méthacrylate de n- ou tert-butyle.

9. Corps moulés en alliages de polyamides selon les revendications 1 à 8.

**Claims**

1. Polyamide alloys with high impact strength, consisting of
1) from 60 to 95% by weight of a commercial polyamide and
2) from 5 to 40% by weight of at least one other high molecular weight polymer component selected from
a) mixtures of aliphatic polyolefines and olefinic copolymers composed of
α) from 65 to 98% by weight of an aliphatic monoolefin having 2 to 4 carbon atoms and
β) from 35 to 2% by weight of (meth)acrylic acid or (meth)acrylic acid esters having 2 to 10 carbon atoms,
b) copolymers of
γ) at the most 70% by weight of styrene,
ε) from 5 to 15% by weight of (meth)acrylic acid and
δ) from 20 to 30% by weight of a (meth)acrylic acid ester having 4 to 10 carbon atoms,
c) polymers of
α') from 70 to 100% by weight of dienes containing 4 to 5 carbon atoms and
β') from 0 to 30% by weight of acrylonitrile and
d) high molecular weight organic silicon compounds
under the conditions that the (meth)acrylic acid may be partly or completely present as salt in the olefinic copolymers in 2a and that the sum of 1 + 2 a) to d), α) + β), α') + β') or γ), ε) and δ) always amounts to 100% by weight, characterised in that the commercial polyamide has a relative vicosity of at least 3·5, determined on a 1% solution of the polyamide in m-cresol at 25°C.

2. Polyamide alloys according to Claim 1, characterised in that they consist of 70 to 90% by weight of component 1) and 30 to 10% by weight of component 2).

3. Polyamide alloys according to Claim 1, characterised in that they contain commercial polyamide-6 as component 1).

4. Polyamide alloys according to Claim 1, characterised in that they contain, as component 2a), a mixture of polyethylene or a polyethylene/polyproplyene copolymer and a copolymer of ethylene, (meth)acrylic acid or methacrylic acid esters having 2 to 7 carbon atoms in the alcoholic component.

5. Polyamide alloys according to Claim 1, characterised in that they contain, as component 2b), a copolymer of styrene, (meth)acrylic acid and (meth)acrylic acid esters having 4 to 7 carbon atoms in the alcoholic component.

6. Polyamide alloys according to Claim 1, characterised in that they contain, as component 2c), polybutadiene, polyisoprene or a copolymer of butadiene and/or isoprene with acrylonitrile.

7. Polyamide alloys according to Claim 1, characterised in that they contain, as component 2d), a polydimethyl siloxane having a molecular weight of at least 10,000.

8. Polyamide alloys according to Claims 4 and 5, characterised in that they contain, as (meth)-acrylic acid ester in component 2a) and 2b), (meth)acrylic acid n- or -tert.-butyl ester.

9. Moulded articles of polyamide alloys according to Claims 1 to 8.